# EUROPEAN PATENT SPECIFICATION

(11) **EP 4 228 296 B1**
(45) Date of publication and mention of the grant of the patent: **02.12.2026**
(21) Application number: 21877018.8
(22) Date of filing: 09.10.2021
(51) Int. Cl.: H04W 4/70, H04W 36/30, H04W 40/22

(54) **HANDOVER METHOD, TERMINAL, NETWORK DEVICE, AND RELAY**
ÜBERGABEVERFAHREN, ENDGERÄT, NETZWERKVORRICHTUNG UND RELAIS
PROCÉDÉ DE TRANSFERT, TERMINAL, DISPOSITIF DE RÉSEAU ET RELAIS

(30) Priority: 10.10.2020 CN 202011078367
(43) Date of publication of application: 16.08.2023
(73) Proprietor: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2021/122807
(87) International publication number: WO 2022/073501

(56) References cited:
- EP-A1- 3 273 745
- EP-A1- 3 457 761
- WO-A1-2016/185285
- WO-A1-2018/059126
- CN-A- 106 686 674
- CN-A- 107 771 410
- CN-A- 109 905 887
- CN-A- 110 611 901
- CN-A- 110 611 901
- ALCATEL-LUCENT SHANGHAI BELL, ALCATEL-LUCENT: "D2D system design enhancement to support out-of-coverage and partial coverage discovery for UE-network relays", 3GPP DRAFT; R1-151328 - D2D SYSTEM DESIGN ENHANCEMENT TO SUPPORT OUT-OF-COVERAGE AND PARTIAL COVERAGE DISCOVERY_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR, vol. RAN WG1, no. Belgrade, Serbia; 20150420 - 20150424, 19 April 2015 (2015-04-19), Mobile Competence Centre ; 650, route des Lucioles ; F-06921 Sophia-Antipolis Cedex ; France , XP050934207

## Description

### TECHNICAL FIELD

The present disclosure relates to the field of communication technology, and in particular, relates to a handover method, a terminal, a network device, and a relay.

### BACKGROUND

In the related art, a relay (Relay) is introduced in order to extend network coverage. The relay itself may be a terminal or a network device. For a case where the relay is the terminal, two types of relays are supported: a terminal-to-network relay (UE-to-Network Relay) and a terminal-to-terminal relay (UE-to-UE Relay). For UE-to-Network Relay, an interface between the relay and the network device uses a Uu interface, an interface between the relay and a relayed UE uses a sidelink interface; a link between the relay and the network is called a backhaul link (Backhaul link, BH). For the UE-to-UE relay, a sidelink interface is used between the relayed UE and the relay, and the two relayed UEs can transmit data through the relay. Connection of accessing the network by the UE through the relay is also referred to as an indirect connection, and connection of accessing the network by the UE through the Uu interface is also referred to as a direct connection. The relayed UE may also be referred to as a remote UE (Remote UE).

After introduction of the relay, for a handover from a direct connection to an indirect connection or a handover from an indirect connection to an indirect connection, since the terminal needs to be connected to the network through the relay, i.e., a target communication link is divided into two parts: the sidelink interface and the Uu interface, a flow of handover based on a measurement result of the Uu interface in the related art is not feasible.

European patent application publication No. EP3273745A1 discloses a method and an apparatus for selecting a relay in device-to-device communication.

International application publication No. WO2018059126A1 discloses a method and a device supporting mobility of remote user equipment.

### SUMMARY

The present disclosure provides a handover method, a terminal, a relay device, and a network device, for solving a handover problem between a direct connection and an indirect connection or between an indirect connection and an indirect connection. The present invention is defined in the accompanying claims.

Beneficial effects of the above technical solution of the present disclosure are as follow. In the embodiment of the present disclosure, a terminal obtains first indication information from a candidate relay, and reports the first indication information to a source network device to which a source cell belongs. The first indication information may assist the source network device in determining a first target cell and/or a first target relay for handover of the terminal, so that the source network device performs a handover decision. The present application provides a method for a terminal to perform handover, which can ensure service continuity when the terminal performs the handover from a direct connection to an indirect connection or from an indirect connection to an indirect connection.

### BRIEF DESCRIPTION OF THE DRAWINGS

Fig. 1 is a schematic diagram showing a communication mode controlled centrally by a network;
Fig. 2 illustrates a schematic diagram of a sidelink interface discovery/communication;
Fig. 3 is a schematic diagram of a UE-to-Network Relay;
Fig. 4 is a first flowchart of an embodiment of the present disclosure;
Fig. 5 is a second flowchart of an embodiment of the present disclosure;
Fig. 6 is a third flowchart of an embodiment of the present disclosure;
Fig. 7 is a fourth flowchart of an embodiment of the present disclosure;
Fig. 8 is a fifth flowchart of an embodiment of the present disclosure;
Fig. 9 is a block diagram of a structure of a terminal according to an embodiment of the present disclosure;
Fig. 10 is a block diagram of a structure of a network device according to an embodiment of the present disclosure;
Fig. 11 is a block diagram of a structure of a relay according to an embodiment of the present disclosure;
Fig. 12 is a block diagram of a structure of a terminal according to an embodiment of the present disclosure;
Fig. 13 is a block diagram of a structure of a network device according to an embodiment of the present disclosure;
Fig. 14 is a block diagram of a structure of a relay according to an embodiment of the present disclosure.

### DETAILED DESCRIPTION

In order to make technical problems, technical solutions and advantages to be solved by the present disclosure more clear, detailed description will be given hereinafter with reference to the drawings and specific embodiments. In the following description, specific details such as specific configurations and components are provided merely to assist in a thorough understanding of embodiments of the present disclosure. In addition, description of known functions and configuration are omitted for clarity and brevity.

It should be understood that references to "one embodiment" or "an embodiment" throughout the specification mean that particular features, structures, or characteristics related to embodiments are included in at least one embodiment of the present disclosure. Thus, "in one embodiment" or "in an embodiment" appearing throughout the specification need not necessarily refer to the same embodiment. Furthermore, these particular features, structures, or characteristics may be combined in any suitable manner in one or more embodiments.

In the various embodiments of the present disclosure, it should be understood that sizes of sequence numbers of processes described below do not imply a sequential order of execution, the order of execution of the processes should be determined by their function and inherent logic, and should not constitute any limitation on a implementation process of the embodiments of the present disclosure.

In addition, such terms as "system" and "network" herein are often used interchangeably herein.

In the embodiments provided herein, it is understood that "B corresponding to A" indicates that B is associated with A from which B may be determined. However, it should also be understood that determining B from A does not mean determining B from A alone, but B may also be determined from A and/or other information.

In the embodiments of the present disclosure, forms of access networks are not limited, and may be access networks of a macro base station (Macro Base Station), a pico base station (Pico Base Station), a Node B (a name of a 3G mobile base station), an enhanced base station (eNB), a home enhanced base station (Femto eNB or Home eNode B or Home eNB or HeNB), a relay station, an access point, an RRU (Remote Radio Unit), an RRH (Remote Radio Head, a RF remote head), etc. The user terminal may be a mobile telephone (or a handset), or other devices capable of transmitting or receiving radio signals, including a user equipment, a personal digital assistant (PDA), a wireless modem, a wireless communication device, a handheld device, a laptop computer, a cordless telephone, a wireless local loop (WLL) station, a CPE (Customer Premise Equipment) capable of converting a mobile signal into a WiFi signal, a mobile smart hotspot, a smart home appliance, or other devices capable of spontaneously communicating with a mobile communication network without human operation, etc.

In describing the embodiments of the present disclosure, some concepts used in the following description are first explained.

### (1) Cellular network communication

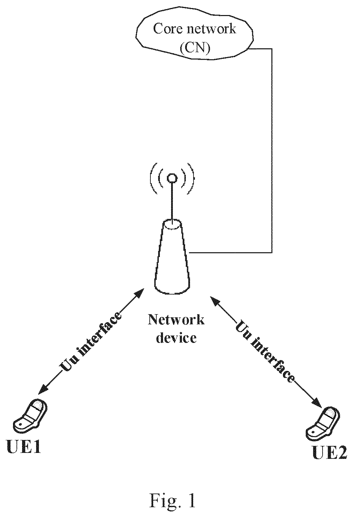

A conventional wireless communication adopts a cellular network communication, that is, the terminal and the network device transmit uplink and downlink data / control information through the Uu interface, as shown in Fig. 1.

### (2) Sidelink

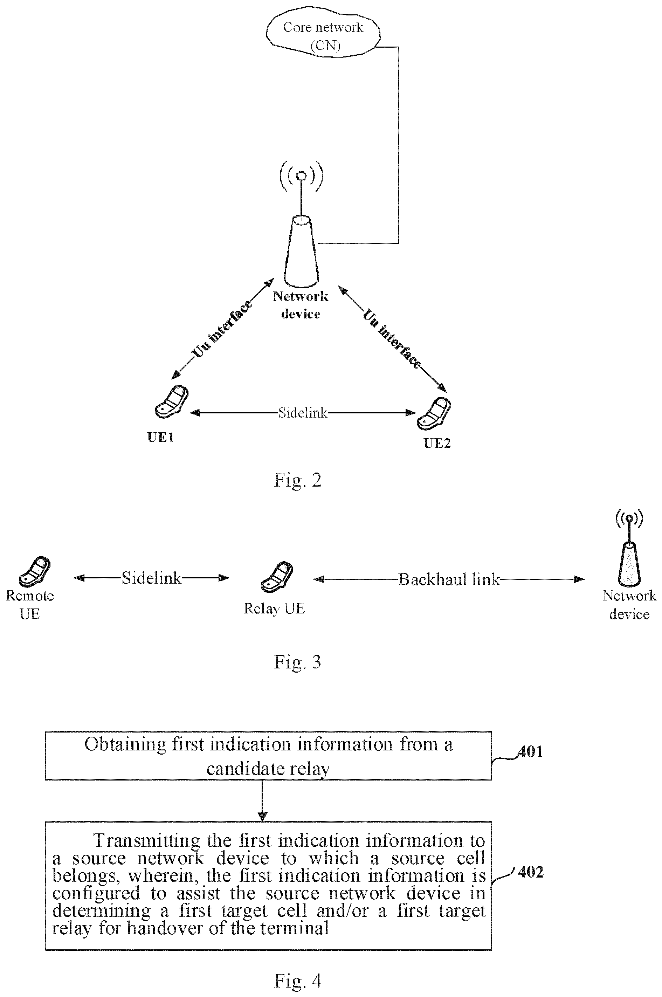

Sidelink refers to a manner in which adjacent terminals can transmit data through a sidelink link (Sidelink, SL) within a short range. A wireless interface corresponding to the Sidelink is called a sidelink interface (also called a Sidelink interface or a PC5 interface), as shown in Fig. 2.

### (3) Relay

A relay (Relay) may be a network device or a terminal with a relay function. If the Relay is a terminal, two types of relay operation modes are supported:
for the UE-to-Network relay, the interface between the relay and the network uses the Uu interface, and the interface between the relayed UE (remote UE) and the relay uses the sidelink interface; the link between the relay and the network may be referred to as a backhaul link for the remote UE;
for the UE-to-UE relay, the sidelink interface is used between the relay and the relayed UE; the two relayed UEs may perform data transmission through the relayed UE. The schematic diagram of UE-to-Network Relay is shown in Fig. 3.

Bearers in a relay scenario are classified into three categories:
a sidelink interface bearer which is a bearer between the remote UE and the relayed UE;
an end-to-end bearer between the remote UE and the network device, i.e., an end-to-end bearer established between the remote UE and the network device;
a bearer of the remote UE on the Uu interface of the backhaul link, i.e., the bearer between the relayed UE and the network device for carrying the data of the remote UE.

No matter which type of bearer, the bearer and the logical channel have a one-to-one correspondence, the logical channel has a corresponding logical channel identifier.

In particular, embodiments of the present disclosure provide a handover method performed by a terminal, so as to solve a handover problem between a direct connection and an indirect connection or between an indirect connection and an indirect connection. As shown in Fig. 4, the handover method includes steps 401-402.

Step 401: obtaining first indication information from a candidate relay.

The candidate relay is a candidate relay when the terminal needs to switch from a current network connection mode to an indirect connection, and the current network connection mode of the terminal may be a direct (direct) connection, or may be an indirect connection, and when the current network connection mode is switched to an indirect connection, the terminal needs to establish a connection with the network through the candidate relay.

The number of the candidate relays may be one or more, and when the number of the candidate relays is one, the candidate relay correspond to one serving cell, and when number of the candidate relays are plural, different candidate relays may correspond to different serving cells or the same serving cell. The first indication information is obtained by the terminal from the candidate relay.

Step 402: transmitting the first indication information to a source network device to which a source cell belongs, wherein, the first indication information is configured to assist the source network device in determining a first target cell and/or a first target relay for handover of the terminal.

The terminal obtains the first indication information, and transmits the first indication information to the source network device, so that the source network device performs a handover decision according to the first indication information. The source network device is a network device to which a source cell currently connected to the terminal belongs, and the first indication information may include information about candidate cells and/or candidate relays of the terminal, and is configured to assist the source network device in determining the first target cell and/or the first target relay for the handover of the terminal.

In the embodiment of the present disclosure, a terminal obtains first indication information from a candidate relay, and reports the first indication information to a source network device to which a source cell belongs. The first indication information may assist the source network device to determine a first target cell and/or a first target relay for handover of the terminal, so that the source network device performs the handover decision. The present application provides a method for a terminal to perform handover, which can ensure the service continuity when the terminal performs handover from the direct connection to the indirect connection or performs handover from the indirect connection to the indirect connection.

It should be noted that, since the network supports multi-handover preparation, the number of first target cells and/or first target relays determined by the source network device for the handover of the terminal may be one or more.

Specifically, the first indication information may include at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve, for example, group information, quality of service (Quality of Service, QoS) of the service, or a service type.

The first indication information includes, but is not limited to, one or a combination of the above, and according to the content of the first indication information, the source network device can uniquely determine the second target relay or the second target cell to which the terminal is to hand over. The second target relay or the second target cell is subordinate to the first target relay or the first target cell, i.e. the second target cell is a subset of the first target cell. If there exists only one first target cell, the first target cell and the second target cell are the same cell; the second target relay is a subset of the first target relay, and if there exists only one first target relay, the second target relay and the first target relay are the same relay.

The number of candidate relays may be N, and N is an integer greater than or equal to 1. The number of the candidate relays may be one or more, and when N is greater than or equal to 2, candidate cells corresponding to at least two candidate relays are the same or different.

Further, obtaining the first indication information from the candidate relay includes at least one of following:
obtaining the first indication information through a relay discovery related message broadcast by the candidate relay on a sidelink interface, wherein the relay discovery related message varies with a sidelink interface discovery mode, such as a relay discovery announcement message;
obtaining the first indication information through a sidelink interface Radio Resource Control (PC5-RRC) message, wherein the terminal establishes a sidelink interface unicast connection with the candidate relay.

In this embodiment, when the terminal obtains the first indication information from the candidate relay, implementation of the terminal includes but is not limited to one of the following methods, wherein,
method 1: the candidate relay broadcasts a relay discovery related message on a sidelink interface, such as a PC5 interface, and the first indication information may be carried by the relay discovery related message; the terminal obtains the first indication information by obtaining the relay discovery related message broadcast by the candidate relay;
method 2: after the terminal performs relay selection, a sidelink interface unicast connection is establish between the terminal and the candidate relay, and then the candidate relay notifies the terminal of the first indication information through the PC5-RRC;
method 3: a part of information content in the first indication information is obtained using the method 1, and a remaining part of the first indication information is obtained using the method 2.

Optionally, the method further includes: transmitting second indication information to a source network device to which the source cell belongs; the second indication information includes at least one of following:
a channel quality measurement result of a sidelink interface between the terminal and the source relay;
moving speed indication information of the source relay;
electricity quantity indication information of the source relay.

If this embodiment is applied to an indirect-to-indirect handover between the terminal and the network, the terminal may also report the second indication information when reporting the first indication information to the source network device. The second indication information may be carried by the first indication information, or may be transmitted separately by the terminal. The source relay refers to the current service relay of the terminal, and the second indication information includes information related to the current service relay of the terminal.

Optionally, the method further includes: obtaining an RRC reconfiguration message; determining a second target cell and/or a second target relay according to the RRC reconfiguration message, and transmitting an RRC reconfiguration complete message to a network device to which the second target cell belongs, or transmitting, through the second target relay, an RRC reconfiguration complete message to a network device to which the second target cell belongs.

The RRC reconfiguration message is transmitted by a source network device, and the terminal can determine, according to the RRC reconfiguration message, a second target cell and/or a second target relay to which the terminal is to hand over. After the terminal determines the second target cell and/or the second target relay, if the second target cell corresponds to a direct connection, the terminal may directly transmit an RRC reconfiguration complete message to a network device to which the second target cell belongs. If the second target cell corresponds to an indirect connection, an RRC reconfiguration complete message may be sent, via the second target relay, to the network device to which the second target cell belongs. The RRC reconfiguration message may include at least one of the following: in addition to existing configuration:
identification information of the second target relay;
identification information of the second target relay link;
mapping relationship between a sidelink interface radio link control (RLC) channel between the terminal and the second target relay and a second target relay Uu interface RLC channel.

Optionally, transmitting the first indication information to the source network device to which the source cell belongs includes: transmitting, through a Uu interface, the first indication information to the source network device to which the source cell belongs, or transmitting, through the source relay, the first indication information to the source network device to which the source cell belongs.

When the connection between the terminal and the network is switched from a direct connection to an indirect direction, the terminal may report the first indication information to the source network device to which the source cell belongs through the Uu interface, and when the connection between the terminal and the network is switched from an indirect connection to an indirect connection, the terminal may report the first indication information to the source network device to which the source cell belongs through the source relay currently in service.

After the source network device receives the first indication information, the source network device performs a handover decision according to the content of the first indication information, and determines a first target cell and/or a first target relay to which the terminal is to hand over; and then transmits a handover request message to the network device to which the first target cell belongs through an inter-base station interface, and the network device to which the first target cell belongs transmits a handover request acknowledge message to the source network device. The number of the first target cell and/or the first target relay may be one or more. The handover request message and the handover request acknowledge message may include, but are not limited to, one or a combination of the following indication information: identification information of the terminal performing handover; identification information of the first target relay or the first target relay link, in the first target cell, to be accessed by the terminal.

The implementation process of the handover method of the present application is described below through specific embodiments.

Example 1: a handover procedure from a direct connection to an indirect connection between the terminal and the network.

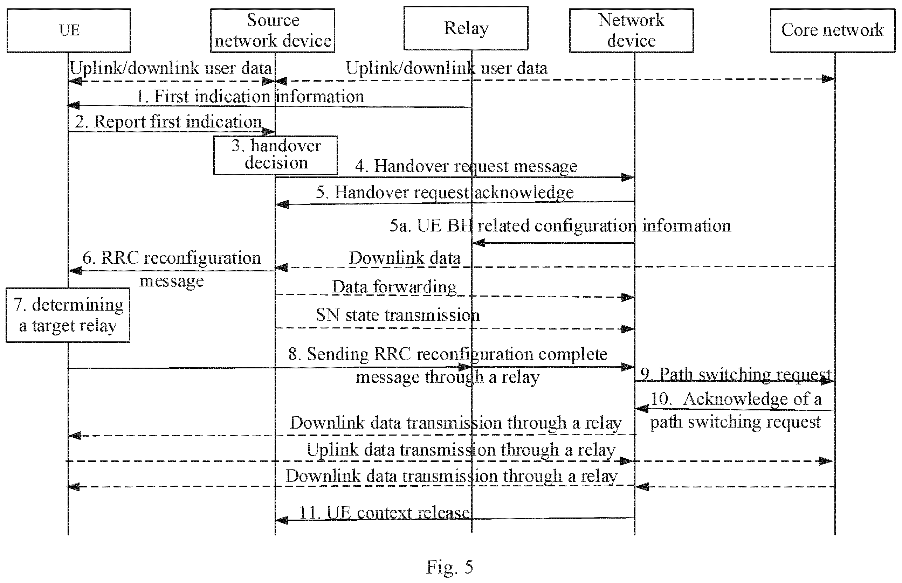

As shown in Fig. 5, an uplink/downlink user data interaction is performed between a terminal (User Equipment, UE) and a source network device to which a source cell belongs, and between the source network device and a core network.

Step 1: the UE obtains the first indication information from a candidate relay (relay). the method for the UE to obtain the first indication information from the relay may include, but is not limited to, one of the following:
method 1: obtaining the first indication information through a relay discovery related message broadcast by a candidate relay through a sidelink interface;
method 2: obtaining the first indication information through a sidelink interface radio resource control PC5-RRC message, wherein the terminal establishes a sidelink interface unicast connection with the candidate relay.
method 3: combining the method 1 and the method 2; part of the information is provided using the method 1, and the remaining of the information is provided using the method 2.

The first indication information includes, but is not limited to, at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve.

The number of the candidate relays may be one or more, and when there are multiple candidate relays, the serving cells corresponding to different candidate relays may be the same or different.

Step 2: the UE reports the first indication information to the source network device to which the source cell belongs through the Uu interface. The UE obtains the first indication information from the relay, and reports the first indication information to the source network device.

Step 3: handover decision is performed; after the source network device of the UE obtains the first indication information from the UE, the source network device performs the handover decision, and determines a first target cell and/or a first target relay.

Step 4: a handover request message; the handover request message transmitted by the source network device to the network device to which the first target cell belongs through the inter-base station interface may include, but is not limited to, one or a combination of the following indication information: identification information of the UE that will perform the handover; relay identification information or the identification information of a relay link used by the UE to access the network device to which the first target cell belongs.

Step 5: a handover request acknowledge; the handover request acknowledge message transmitted by the network device to which the first target cell belongs through the inter-base station interface to the source network device may include, but is not limited to, one or a combination of the following indication information: identification information of the UE that is to perform handover; relay identification information or the identification information of a relay link used by the UE to access the network device to which the first target cell belongs.

Optionally, the network device to which the first target cell belongs may further perform step 5a, that is, the network device to which the first target cell belongs notifies the relay of the mapping relationship between the sidelink interface RLC channel and the Uu BH channel of the UE.

The source network device determines a unique second target cell and/or a unique second target relay for the terminal according to the received handover request acknowledge message.

Step 6: the source network device transmits an RRC reconfiguration message to the UE through the Uu interface; in addition to the existing configuration, the RRC reconfiguration message may also carry the following:
identification information of the second target relay;
identification information of the second target relay link;
mapping relationship between a sidelink interface radio link control (RLC) channel between the terminal and the second target relay and a second target relay Uu interface RLC channel.

Step 7: the UE determines a second target relay to be accessed.

Step 8: the UE transmits an RRC reconfiguration complete message to the network device to which the second target cell belongs via the second target relay.

Step 9: the network device to which the second target cell belongs transmits a route handover request message to the core network; it should be noted that step 9 and step 7 have no priority order. After receiving the RRC reconfiguration complete message transmitted by the UE, the network device to which the second target cell belongs transmits the third indication information to the core network for requesting the core network to perform a route handover.

Step 10: a response message corresponding to step 9, i.e., a route handover request acknowledge message transmitted by the core network is received.

Step 11: the network device to which the second target cell belongs instructs the source network device to release the UE context.

The example 1 is a handover procedure of the terminal handing over from a direct connection to an indirect connection, in which the terminal obtains the first indication information from the candidate relay and reports the first indication information to the source network device to which the source cell belongs. The first indication information may assist the source network device in determining a first target cell and/or a first target relay to which the terminal is to hand over, so that the source network device performs a handover decision, and it may be ensured that the handover between a direct connection and an indirect connection of the terminal can be successfully completed.

Example 2: a handover procedure of the connection between the terminal and the network from an indirect connection to an indirect connection.

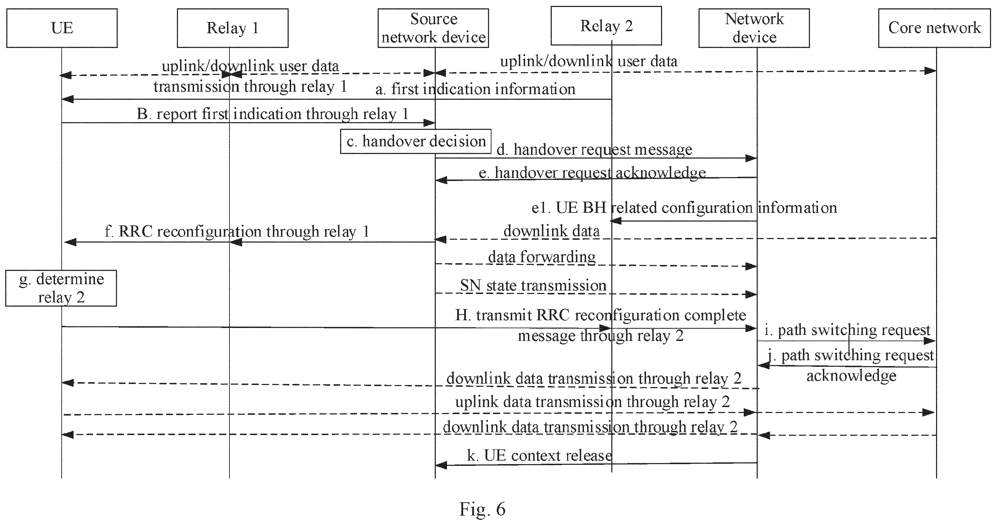

As shown in Fig. 6, uplink/downlink user data interactions are performed between the UE and the current service source relay, between the source relay and the source network device to which the source cell belongs, and between the source network device and the core network.

Step a: the UE obtains the first indication information from the candidate relay (relay2). The method for obtaining the first indication information from the relay2 by the UE may include, but is not limited to, one of the following:
method 1: obtaining the first indication information through a relay discovery related message broadcast by relay2 on a sidelink interface;
method 2: obtaining the first indication information through a sidelink interface radio resource control PC5-RRC message, wherein the terminal establishes a sidelink interface unicast connection with relay2;
method 3: combining the method 1 with the method 2, wherein a part of information is provided using the method 1, and a remaining part of the information is provided using the method 2.

The first indication information includes, but is not limited to, at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve.

The number of the candidate relays may be one or more, and when there are multiple candidate relays, the serving cells corresponding to different candidate relays may be the same or different.

Step b: the UE reports the first indication information to the source network device to which the source cell belongs through the source relay (relay1). The UE obtains the first indication information from the relay2, and reports the first indication information to the source cell through the relay1.

Step c: handover decision is performed; after the source network device of the UE obtains the first indication information from the UE, the source network device performs the handover decision, and determines a first target cell and/or a first target relay.

Step d: a handover request message; the handover request message transmitted by the source network device to the network device to which the first target cell belongs through the inter-base station interface may include, but is not limited to, one or a combination of the following indication information: identification information of the UE that will perform the handover; relay identification information or the identification information of a relay link used by the UE to access the network device to which the first target cell belongs.

Step e: a handover request acknowledge; the handover request acknowledge message transmitted by the network device to which the first target cell belongs through the inter-base station interface to the source network device may include, but is not limited to, one or a combination of the following indication information: identification information of the UE that is to perform handover; relay identification information or the identification information of a relay link used by the UE to access the network device to which the first target cell belongs.

In addition, the network device to which the first target cell belongs may further perform step e1, that is, the network device to which the first target cell belongs notifies the relay of the mapping relationship between the sidelink interface RLC channel and the Uu BH channel of the UE.

The source network device determines a unique second target cell and/or a unique second target relay for the terminal according to the received handover request acknowledge message.

Step f: the source network device transmits an RRC reconfiguration message to the UE through the relay1; in addition to the existing configuration, the RRC reconfiguration message may also carry the following:
identification information of the second target relay (i.e., relay2);
identification information of the second target relay link;
mapping relationship between a sidelink interface radio link control (RLC) channel between the terminal and the second target relay and a second target relay Uu interface RLC channel.

Step g: the UE determines a second target relay (i.e., relay2) to be accessed.

Step h: the UE transmits an RRC reconfiguration complete message to the network device to which the second target cell belongs via the relay2.

Step i: the network device to which the second target cell belongs transmits a route handover request message to the core network; it should be noted that step i and step g have no priority order. After receiving the RRC reconfiguration complete message transmitted by the UE, the network device to which the second target cell belongs transmits the third indication information to the core network for requesting the core network to perform a route handover.

Step j: a response message corresponding to step i, i.e., a route handover request acknowledge message transmitted by the core network is received.

Step k: the network device to which the second target cell belongs instructs the source network device to release the UE context.

The example 2 is a handover procedure of the terminal handing over from an indirect connection to an indirect connection, in which the terminal obtains the first indication information from the candidate relay and reports the first indication information to the source network device to which the source cell belongs. The first indication information may assist the source network device in determining a first target cell and/or a first target relay to which the terminal is to hand over, so that the source network device performs a handover decision, and it may be ensured that the handover between an indirect connection and an indirect connection of the terminal can be successfully completed.

It should be noted that the source network devices in Fig. 5 and Fig. 6 are the network devices to which the source cell currently connected to the terminal belongs, and the network devices in Fig. 5 and Fig. 6 are the network devices to which the target cell to which the terminal hands over belongs. Since the second target cell belongs to the first target cell, both the network device to which the first target cell belongs and the network device to which the second target cell belongs may be exemplified by the network devices in FIG. 5 and Fig. 6.

In the embodiments of the present disclosure, the terminal obtains the first indication information from a candidate relay, and reports the first indication information to the source network device to which the source cell belongs. The first indication information may assist the source network device in determining a first target cell and/or a first target relay to which the terminal is to hand over, so as to enable the source network device to perform a handover decision. The handover method by the terminal provided in the present application may ensure service continuity when the terminal performs the handover from a direct connection to an indirect connection or performs the handover from the indirect connection to the indirect connection.

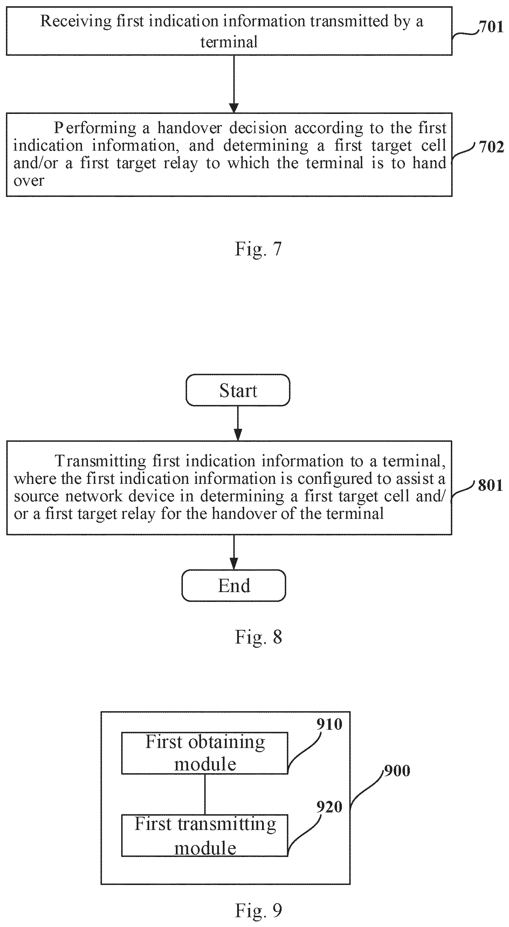

As shown in Fig. 7, an embodiment of the present disclosure also provides a handover method. The handover method is applied to a network device, where the network device is a source network device to which a source cell belongs. The method includes steps 701-702.

Step 701: receiving first indication information transmitted by a terminal.

The first indication information is obtained by a candidate relay of the terminal, and the candidate relay is a candidate relay when the terminal needs to hand over from the current network connection mode to the indirect connection, wherein, the number of the candidate relays may be one or more; when the candidate relay is one candidate relay, the candidate relay corresponds to one serving cell, or when the number of the candidate relays is plural, different candidate relays may correspond to different serving cells or the same serving cell.

Step 702: performing a handover decision according to the first indication information, and determining a first target cell and/or a first target relay to which the terminal is to hand over.

The source network device determines, according to the first indication information, a first target cell and/or a first target relay to which the terminal is to hand over. The first indication information may include information about the first target cell and/or the first target relay to which the terminal is to hand over.

Specifically, the first indication information may include at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve, for example, group information, quality of service (Quality of Service, QoS) of the service, or a service type.

The first indication information includes, but is not limited to, one or a combination of the above, and according to the content of the first indication information, the source network device can uniquely determine the second target relay or the second target cell to which the terminal is to hand over. The second target relay or the second target cell is subordinate to the first target relay or the first target cell.

The number of candidate relays may be N, and N is an integer greater than or equal to 1. The number of the candidate relays may be one or more, and when N is greater than or equal to 2, candidate cells corresponding to at least two candidate relays are the same or different.

Optionally, the method further includes: transmitting a handover request message to a network device to which the first target cell belongs; receiving a handover request acknowledge message, wherein the handover request message and/or the handover request acknowledge message include at least one of following: identification information of the terminal; identification information of the first target relay and identification information of a first target relay link.

Optionally, the method further includes receiving second indication information transmitted by the terminal, wherein the second indication information includes at least one of following:
a channel quality measurement result of a sidelink interface between the terminal and the source relay;
moving speed indication information of the source relay;
electricity quantity indication information of the source relay.

If the embodiment is applied to an indirect-to-indirect handover between a terminal and a network, the terminal may also report the second indication information when reporting the first indication information to a source network device. The second indication information may be carried by the first indication information, or may be transmitted separately by the terminal. The second indication information includes information related to the current service relay of the terminal.

Optionally, the method further includes: transmitting an RRC reconfiguration message to the terminal through a Uu interface or a source relay. The RRC reconfiguration message may include at least one of following:
identification information of the second target relay;
identification information of the second target relay link;
mapping relationship between a sidelink interface radio link control (RLC) channel between the terminal and the second target relay and a second target relay Uu interface RLC channel.

The source network device transmits an RRC reconfiguration message to a terminal, and the terminal can determine, according to the RRC reconfiguration message, a second target cell and/or a second target relay to which the terminal is to hand over. After the terminal determines the second target cell and/or the second target relay, if the second target cell corresponds to a direct connection, the terminal may directly transmit an RRC reconfiguration complete message to a network device to which the second target cell belongs; if the second target cell corresponds to an indirect connection, the terminal may transmit, through the second target relay, an RRC reconfiguration complete message to the network device to which the second target cell belongs.

Optionally, receiving the first indication information transmitted by the terminal includes: receiving, through a Uu interface, the first indication information transmitted by the terminal, or receiving, through a source relay, the first indication information transmitted by the terminal.

When the connection between the terminal and the network is handed over from a direct connection to an indirect connection, the terminal may report the first indication information through the Uu interface, and when the connection between the terminal and the network is handed over from an indirect connection to an indirect connection, the terminal may report the first indication information through the source relay currently in service. After receiving the first indication information, the source network device performs a handover decision according to the content of the first indication information, and determines a first target cell and/or a first target relay to which the terminal is to hand over,

In the embodiments of the present disclosure, a terminal obtains first indication information from a candidate relay, and the source network device performs a handover decision according to the first indication information and determines a first target cell and/or a first target relay to which the terminal is to hand over. The present application provides a method for a terminal to perform handover, which can ensure the service continuity when the terminal performs a handover from a direct connection to an indirect connection or from an indirect connection to an indirect connection.

As shown in Fig. 8, the embodiment of the present disclosure also provides a handover method, which is applied to a relay, wherein the relay is a candidate relay for handover of a terminal, the method includes a step 801.

Step 801: transmitting first indication information to a terminal, where the first indication information is configured to assist a source network device in determining a first target cell and/or a first target relay for the handover of the terminal.

The candidate relay is a candidate relay when the terminal needs to hand over from the current network connection mode to an indirect connection, and the current network connection mode of the terminal may be a direct connection or an indirect connection. When the current network connection mode is handed over to an indirect connection, the terminal needs to establish a connection with the network through the candidate relay.

The number of the candidate relays may be one or more, and when the number of the candidate relays is one, the candidate relay corresponds to one serving cell, and when the number of the candidate relays are plural, different candidate relays may correspond to different serving cells or the same serving cell. The first indication information is obtained by the terminal from the candidate relay.

The first indication information is configured to assist the source network device in determining a first target cell and/or a first target relay for handover of the terminal, and the terminal obtains the first indication information, transmits the first indication information to a source network device, so that the source network device performs a handover decision according to the first indication information.

Specifically, the first indication information may include at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve, for example, group information, quality of service (Quality of Service, QoS) of the service, or a service type.

The first indication information includes, but is not limited to, one or a combination of the above, and according to the content of the first indication information, the source network device can uniquely determine the second target relay or the second target cell to which the terminal is to hand over. The second target relay or the second target cell belongs to the first target relay or the first target cell.

Optionally, transmitting the first indication information to the terminal includes at least one of following:
broadcasting a relay discovery related message in a sidelink interface, wherein the relay discovery related message carries the first indication information, wherein the relay discovery related message varies with a discovery mode of the sidelink interface, for example, may be an announcement message of a relay discovery;
transmitting the first indication information through a sidelink interface radio resource control PC5-RRC message, wherein the terminal establishes a sidelink interface unicast connection with the candidate relay.

In this embodiment, when the candidate relay transmits the first indication information to the terminal, the implementation of the transmitting includes but is not limited to one of the following methods:
method 1: the candidate relay broadcasts a relay discovery related message on a sidelink interface, such as a PC5 interface, and the first indication information may be carried by the relay discovery related message; the terminal obtains the first indication information by obtaining the relay discovery related message broadcast by the candidate relay;
method 2: after the terminal performs relay selection, a sidelink interface unicast connection is establish between the terminal and the candidate relay, and then the candidate relay notifies the terminal of the first indication information through the PC5-RRC;
method 3: a part of information content in the first indication information is obtained using the method 1, and a remaining part of the first indication information is obtained using the method 2.

After receiving the first indication information, the terminal reports the first indication information to a source network device, and the source network device determines, according to the first indication information, a first target cell and/or a first target relay to which the terminal is to hand over, and transmits a handover request message to the network device to which the first target cell belongs.

Optionally, the method further includes: receiving mapping relationship between a sidelink interface radio link control RLC channel between the terminal and the first target relay and a first target relay Uu interface RLC channel. The mapping relationship is transmitted by the target network device to which the target cell belongs.

Optionally, the source network device transmits an RRC reconfiguration message to the terminal after receiving the handover request acknowledge message, and the terminal determines the second target relay according to the RRC reconfiguration message, and transmits an RRC reconfiguration complete message to the network device to which the second target relay belongs through the second target relay, and the network device to which the second target relay belongs transmits a path switching request to the core network.

In the embodiment of the present disclosure, the candidate relay transmits the first indication information to the terminal, and the terminal reports the first indication information to the source network device to which the source cell belongs. The first indication information may assist the source network device in determining a first target cell and/or a first target relay for handover of the terminal, so that the source network device performs the handover decision. The present application provides a method for a terminal to perform handover, which can ensure the service continuity when the terminal performs handover from a direct connection to an indirect connection or from an indirect connection to an indirect connection.

As shown in Fig. 9, an embodiment not covered by the claims of the present disclosure provides a terminal 900. The terminal 900 includes:
a first obtaining module 910, configured to obtain first indication information from a candidate relay;
a first transmitting module 920, configured to transmit the first indication information to a source network device to which a source cell belongs, wherein, the first indication information is configured to assist the source network device in determining a first target cell and/or a first target relay for handover of the terminal.

Optionally, the first indication information may include at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve.

Optionally, the number of candidate relays is N, and N is an integer greater than or equal to 1.

Optionally, when N is greater than or equal to 2, candidate cells corresponding to at least two candidate relays are the same or different.

Optionally, the first obtaining module includes at least one of following:
a first obtaining unit configured to obtain the first indication information through a relay discovery related message broadcast by the candidate relay on a sidelink interface;
a second obtaining unit, configured to obtain the first indication information through a sidelink interface Radio Resource Control (PC5-RRC) message, wherein the terminal establishes a sidelink interface unicast connection with the candidate relay.

Optionally, the terminal further includes a third transmitting module, configured to transmit second indication information to a source network device to which the source cell belongs; wherein the second indication information includes at least one of following:
a channel quality measurement result of a sidelink interface between the terminal and the source relay;
moving speed indication information of the source relay;
electricity quantity indication information of the source relay.

Optionally, the terminal further includes:
a second obtaining module, configured to obtain an RRC reconfiguration message;
a second determining module, configured to determine a second target cell and/or a second target relay according to the RRC reconfiguration message; and
a fourth transmitting module, configured to transmit an RRC reconfiguration complete message to a network device to which the second target cell belongs, or transmit, through the second target relay, an RRC reconfiguration complete message to a network device to which the second target cell belongs.

Optionally, the RRC reconfiguration message includes at least one of following:
identification information of the second target relay;
identification information of the second target relay link;
mapping relationship between a sidelink interface radio link control (RLC) channel between the terminal and the second target relay and a second target relay Uu interface RLC channel.

Optionally, the first transmitting module is specifically configured to: transmit, through a Uu interface, the first indication information to the source network device to which the source cell belongs, or transmit, through the source relay, the first indication information to the source network device to which the source cell belongs.

It should be noted that the embodiment of the terminal corresponds to the embodiment of the handover method applied to the terminal, and all the implementations in the embodiment of the method are applicable to the embodiment of the terminal. The same technical effect can be achieved. Since the method embodiment and the terminal embodiment are based on the same application concept, and the principles of solving the problem are similar, reference can be made to each other, and the repetition between the method embodiment and the terminal embodiment is not described again.

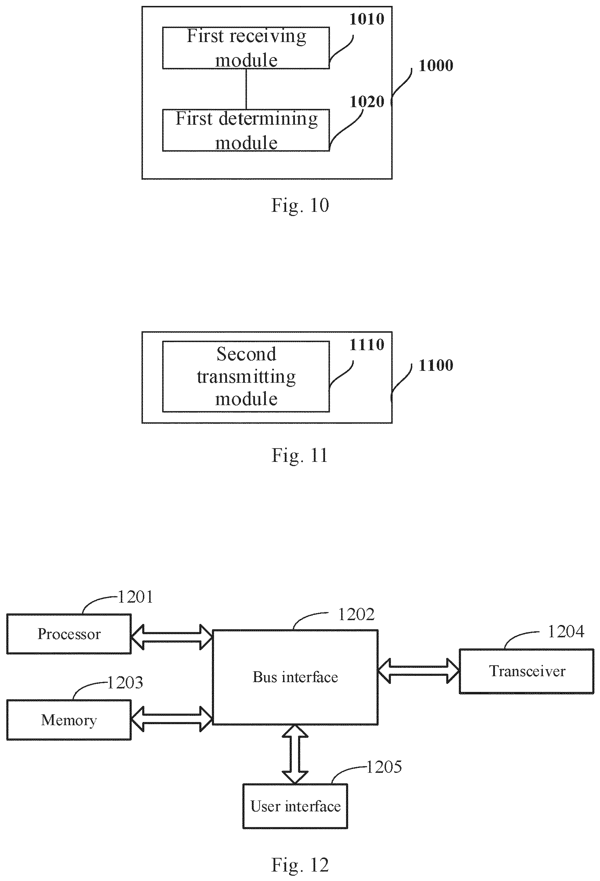

As shown in Fig. 10, an embodiment not covered by the claims of the present disclosure further provides a network device 1000, the network device 1000 is a source network device to which a source cell belongs. The network device includes:
a first receiving module 1010, configured to receive first indication information transmitted by a terminal;
a first determining module 1020, configured to perform a handover decision according to the first indication information, and determine a first target cell and/or a first target relay to which the terminal is to hand over.

Optionally, the network device 1000 further includes:
a fifth transmitting module, configured to transmit a handover request message to a network device to which the first target cell belongs;
a second receiving module, configured receive a handover request acknowledge message, wherein the handover request message and/or the handover request acknowledge message include at least one of following: identification information of the terminal; identification information of the first target relay and identification information of a first target relay link.

Optionally, the first indication information includes at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve.

Optionally, the network device further includes a third receiving module, configured to receive second indication information transmitted by the terminal, wherein the second indication information includes at least one of following:
a channel quality measurement result of a sidelink interface between the terminal and the source relay;
moving speed indication information of the source relay;
electricity quantity indication information of the source relay.

Optionally, the network device further includes a sixth transmitting module, configured to transmit an RRC reconfiguration message to the terminal through a Uu interface or a source relay.

Optionally, the RRC reconfiguration message includes at least one of following:
identification information of the second target relay;
identification information of the second target relay link;
mapping relationship between a sidelink interface radio link control (RLC) channel between the terminal and the second target relay and a second target relay Uu interface RLC channel.

Optionally, the first receiving module is specifically configured to: receive, through a Uu interface, the first indication information transmitted by the terminal, or receive, through a source relay, the first indication information transmitted by the terminal.

It should be noted that the embodiment of the network device corresponds to the embodiment of the handover method applied to the network device, and all the implementations in the embodiment of the method are applicable to the embodiment of the network device. The same technical effect can be achieved.

As shown in Fig. 11, an embodiment not covered by the claims of the present disclosure also provides a relay 1100, which is a candidate relay for handover of the terminal. The method includes: a second transmitting module 1110, configured to transmit first indication information to a terminal, where the first indication information is configured to assist a source network device in determining a first target cell and/or a first target relay for the handover of the terminal.

Optionally, the first indication information may include at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve.

Optionally, the second transmitting module includes at least one of following:
a first transmitting unit, configured to broadcast a relay discovery related message in a sidelink interface, wherein the relay discovery related message carries the first indication information;
a second transmitting unit, configured to transmit the first indication information through a sidelink interface radio resource control PC5-RRC message, wherein the terminal establishes a sidelink interface unicast connection with the candidate relay.

Optionally, the relay further includes a fourth receiving module, configured to receive mapping relationship between a sidelink interface radio link control RLC channel and a first target relay Uu interface RLC channel between the terminal and the first target relay.

It should be noted that the embodiment of the relay corresponds to the embodiment of the handover method applied to the relay, and all the implementations in the embodiment of the method are applicable to the embodiment of the network side device. The same technical effect can be achieved.

It should be noted that the division of the units in the embodiments of the present application is schematic, and is only a logical division of functions, and may be implemented in another division manner. In addition, each functional unit in each embodiment of the present application may be integrated in one processing unit, each unit may exist physically separately, or two or more units may be integrated in one unit. The integrated unit may be implemented in the form of either hardware or software functional units.

The integrated unit, if implemented in the form of a software functional unit and sold or used as a separate product, may be stored in a processor-readable storage medium. Based on this understanding, an essential part, or a part contributing to the related art, or a part or all, of technical solution of the present application may be embodied in the form of a software product. The computer software product is stored in a storage medium and includes instructions for causing a computer device (which may be a personal computer, a server, or a network device or the like) or a processor (processor) to perform all or part of the steps of the method described in various embodiments of the present application. The aforementioned storage media include various media that can store program codes, such as a U disk, a mobile hard disk, a read-only memory (Read-Only Memory), a random access memory (Random Access Memory), a magnetic disk, or an optical disk.

As shown in Fig. 12, embodiments of the present disclosure also provide a terminal including a transceiver 1204, a memory 1203, a processor 1201, and a computer program stored on the memory 1203 and executable on the processor.

The memory 1203 is configured for storing a computer program, the transceiver 1204 is connected to a bus interface 1202 for transmitting and receiving data under the control of the processor 1201. The processor 1201 is configured for reading a computer program in the memory 1203 and performing the following operations:
obtaining first indication information from a candidate relay;
transmitting the first indication information to a source network device to which a source cell belongs, wherein, the first indication information is configured to assist the source network device in determining a first target cell and/or a first target relay for handover of the terminal;

Optionally, the first indication information may include at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve.

Optionally, the number of candidate relays may be N, and N is an integer greater than or equal to 1.

Optionally, when N is greater than or equal to 2, candidate cells corresponding to at least two candidate relays are the same or different.

Optionally, obtaining the first indication information from the candidate relay includes at least one of following:
obtaining the first indication information through a relay discovery related message broadcast by the candidate relay on a sidelink interface;
obtaining the first indication information through a sidelink interface Radio Resource Control (PC5-RRC) message, wherein the terminal establishes a sidelink interface unicast connection with the candidate relay.

Optionally, when executing the program, the processor is further configured for transmitting second indication information to a source network device to which the source cell belongs; the second indication information includes at least one of following:
a channel quality measurement result of a sidelink interface between the terminal and the source relay;
moving speed indication information of the source relay;
electricity quantity indication information of the source relay.

Optionally, when executing the program, the processor is further configured for:
obtaining an RRC reconfiguration message;
determining a second target cell and/or a second target relay according to the RRC reconfiguration message, and transmitting an RRC reconfiguration complete message to a network device to which the second target cell belongs, or transmitting, through the second target relay, an RRC reconfiguration complete message to a network device to which the second target cell belongs.

Optionally, the RRC reconfiguration message may include at least one of the following:
identification information of the second target relay;
identification information of the second target relay link;
mapping relationship between a sidelink interface radio link control (RLC) channel between the terminal and the second target relay and a second target relay Uu interface RLC channel.

Optionally, transmitting the first indication information to the source network device to which the source cell belongs includes: transmitting, through a Uu interface, the first indication information to the source network device to which the source cell belongs, or transmitting, through the source relay, the first indication information to the source network device to which the source cell belongs.

It should be noted that in Fig. 12, the bus architecture may include any number of interconnected buses and bridges. In particular, various circuits such as one or more processors represented by a processor 1201 and a memory represented by the memory 1203 are linked together. The bus architecture may also link together various other circuits, such as peripheral devices, regulators, and power management circuits, which are well known in the art and, therefore, will not be described further herein. The bus interface provides an interface. The transceiver 1204 may be a number of elements, including a transmitter and a transceiver, for providing a unit for communicating with various other devices over a transmission medium. These transmission media include wireless channels, wired channels, optical cables, and the like. For different terminals, the user interface 1205 may also be an interface capable of externally and internally connecting with a desired device including, but not limited to, a keypad, a display, a speaker, a microphone, a joystick, etc. The processor 1201 is responsible for managing the bus architecture and general processing, and the memory 1203 may store data used by the processor 1201 in performing operations.

Optionally, the processor 1201 may be a CPU (Central Processing Unit), ASIC ( Application Specific Integrated Circuit), FPGA (Field Programmable Gate Array) or CPLD (Complex Programmable Logic Device). The processor may also employ a multi-core architecture. The processor executes any of the methods provided in the embodiments of the present application in accordance with the obtained executable instructions by calling the computer program stored in the memory. The processor and the memory may also be physically arranged separately.

It should be noted that the terminal provided in the embodiment of the present disclosure can implement all the steps of the methods implemented in the method embodiment applied to the terminal, and can achieve the same technical effect. Here, the same parts and beneficial effects as those of the method embodiment are not described in detail.

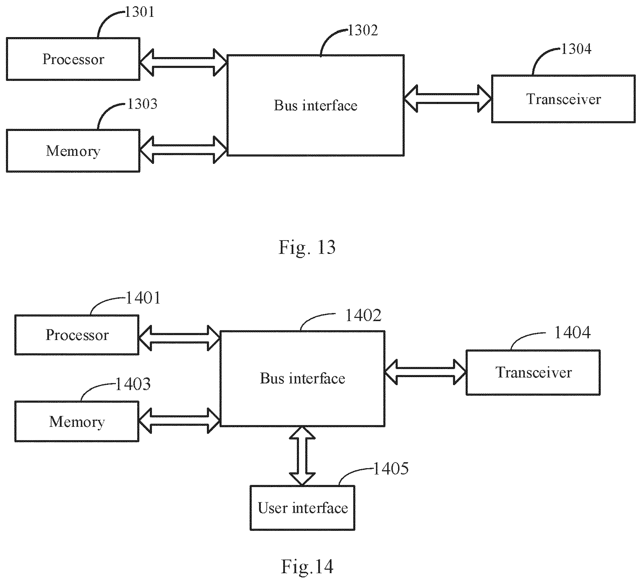

As shown in Fig. 13, embodiments of the present disclosure also provide a network device including a transceiver 1304, a memory 1303, a processor 1301, and a computer program stored on the memory 1303 and operable on the processor.

The memory 1303 is configured for storing the computer program, the transceiver 1304 is connected to the bus interface 1302 and configured for transmitting and receiving data under the control of the processor 1301. The processor 1301 is configured for reading the computer program in the memory 1303 and performing the following operations:
receiving first indication information transmitted by a terminal;
performing a handover decision according to the first indication information, and determining a first target cell and/or a first target relay to which the terminal is to hand over.

Optionally, when executing the computer program, the processor is further configured for:
transmitting a handover request message to a network device to which the first target cell belongs;
receiving a handover request acknowledge message, wherein the handover request message and/or the handover request acknowledge message include at least one of following: identification information of the terminal; identification information of the first target relay and identification information of a first target relay link.

Optionally, the first indication information includes at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve.

Optionally, when executing the computer program, the processor is further configured for receiving second indication information transmitted by the terminal, wherein the second indication information includes at least one of following:
a channel quality measurement result of a sidelink interface between the terminal and the source relay;
moving speed indication information of the source relay;
electricity quantity indication information of the source relay.

Optionally, when executing the computer program, the processor is further configured for: transmitting an RRC reconfiguration message to the terminal through a Uu interface or a source relay.

Optionally, the RRC reconfiguration message may include at least one of following:
identification information of the second target relay;
identification information of the second target relay link;
mapping relationship between a sidelink interface radio link control (RLC) channel between the terminal and the second target relay and a second target relay Uu interface RLC channel.

Optionally, receiving the first indication information transmitted by the terminal includes: receiving, through a Uu interface, the first indication information transmitted by the terminal, or receiving, through a source relay, the first indication information transmitted by the terminal

In Fig. 13, the bus architecture may include any number of interconnected buses and bridges. In particular, various circuits such as one or more processors represented by a processor 1301 and a memory represented by the memory 1303 are linked together. The bus architecture may also link together various other circuits, such as peripheral devices, voltage regulators, and power management circuits, which are well known in the art and, therefore, will not be described further herein. The bus interface provides an interface. The transceiver 1304 may be a number of elements, including a transmitter and a transceiver, for providing a unit for communicating with various other devices over a transmission medium. These transmission media include wireless channels, wired channels, optical cables, and the like. The processor 1201 is responsible for managing the bus architecture and general processing, and the memory 1303 may store data used by the processor 1301 in performing operations.

The processor 1301 may be a central processing unit (CPU), an Application Specific Integrated Circuit (ASIC), a Field Programmable Gate Array (FPGA), or complex programmable logic device (Complex Programmable Logic Device, CPLD), or the processor may also adopt a multi-core architecture.

It should be noted that the network device provided in the embodiment of the present disclosure can implement all the method steps implemented in the method embodiment applied to the network device, and can achieve the same technical effect. Here, the same parts and beneficial effects in the embodiment as those of the method embodiment are not described in detail.

As shown in Fig. 14, embodiments of the present disclosure also provide a relay, wherein the relay is a candidate relay for handover of the terminal, and the relay may be a network device or a terminal having a relay function. In this embodiment, the relay being a terminal is taken as an example. The relay includes a transceiver 1404, a memory 1403, a processor 1401, and a computer program stored on the memory 1403 and operable on the processor.

The memory 1403 is configured for storing a computer program, the transceiver 1404 is connected to the bus interface 1402 and is configured for transmitting and receiving data under the control of the processor 1401; and the processor 1401 is configured for reading the computer program in the memory 1403 and performing the following operations:
transmitting first indication information to a terminal, where the first indication information is configured to assist a source network device in determining a first target cell and/or a first target relay for the handover of the terminal.

Optionally, the first indication information may include at least one of following:
Public Land Mobile Network (PLMN) identification information corresponding to the candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of the Uu interface of the candidate relay;
a channel quality measurement result of a sidelink interface between a candidate relay and the terminal;
identification information of the candidate relay;
identification information of the candidate relay link;
moving speed indication information of the candidate relay;
electricity quantity indication information of the candidate relay;
indication information of a service that the candidate relay may serve.

Optionally, transmitting the first indication information to the terminal includes at least one of following:
broadcasting a relay discovery related message in a sidelink interface, wherein the relay discovery related message carries the first indication information;
transmitting the first indication information through a sidelink interface radio resource control PC5-RRC message, wherein the terminal establishes a sidelink interface unicast connection with the candidate relay.

Optionally, when executing the computer program, the processor is further configured for: receiving mapping relationship between a sidelink interface radio link control RLC channel between the terminal and the first target relay and a first target relay Uu interface RLC channel.

It should be noted that in Fig. 14, the bus architecture may include any number of interconnected buses and bridges. In particular, various circuits such as one or more processors represented by a processor 1401 and a memory represented by the memory 1403 are linked together. The bus architecture may also link together various other circuits, such as peripheral devices, voltage regulators, and power management circuits, which are well known in the art and, therefore, will not be described further herein. The bus interface provides an interface. The transceiver 1404 may be a number of elements, including a transmitter and a transceiver, for providing a unit for communicating with various other devices over a transmission medium. These transmission media include wireless channels, wired channels, optical cables, and the like. For different terminals, the user interface 1405 may also be an interface capable of externally and internally connecting with a desired device including, but not limited to, a keypad, a display, a speaker, a microphone, a joystick, etc. The processor 1401 is responsible for managing the bus architecture and general processing, and the memory 1403 may store data used by the processor 1401 in performing operations..

Optionally, the processor 1401 may be a CPU (Central Processing Unit), ASIC (Application Specific Integrated Circuit), FPGA (Field Programmable Gate Array) or CPLD (Complex Programmable Logic Device). The processor may also employ a multi-core architecture.

The processor executes any of the methods provided in the embodiments of the present application in accordance with the obtained executable instructions by calling the computer program stored in the memory. The processor and the memory may also be physically arranged separately.

It should be noted that the relay provided by the embodiment of the present disclosure can realize all the steps of the method implemented by the method embodiment applied to the relay, and can achieve the same technical effect. Here, the same parts and beneficial effects in the embodiment as those of the method embodiment are not described in detail.

In addition, embodiment of the present disclosure also provide a computer-readable storage medium having a computer program stored thereon, wherein when the program is executed by a processor, the processor implements steps in the handover method described above, and the same technical effect can be implemented. In order to avoid repetition, detailed description is not repeated here. The readable storage medium may be any available medium or data storage device accessible by a processor, and includes, but is not limited to, a magnetic memory (such as floppy disk, a hard disk, a magnetic tape, a magneto-optical disk (MO), etc.), an optical memory (such as CD, DVD, BD, HVD, etc.), a semiconductor memory (such as ROM, EPROM, EEPROM, a nonvolatile memory (NAND FLASH), a solid state hard disk (SSD)), and the like.

Furthermore, it should be noted that in the apparatus and the method of the present disclosure, components or steps may be disassembled and/or reassembled. These disassembling and/or reassembling should be considered as an equivalent solution of the present disclosure. Additionally, steps of performing the above-described series of processes may naturally be performed in the time sequence of describing the processes, but need not necessarily be performed in a time order only, and some steps may be performed in parallel or independently of each other. It will be apparent to one of ordinary skill in the art that all or any of the steps of the method or the components of the apparatus of the present disclosure may be implemented in any computing device (including processors, storage media, etc.) or any network of computing devices in hardware, firmware, software, or combinations thereof. This can be accomplished by those of ordinary skill in the art using their basic programming skills after having read the description of the present disclosure.

Accordingly, the objects of the present disclosure may also be achieved by executing a program or a group of programs on any computing device. The computing device may be a known general purpose device. Accordingly, the object of the present disclosure may also be achieved by merely providing a program product including program codes for implementing the method or the apparatus. That is, such a program product also constitutes the present disclosure, and a storage medium storing such a program product also constitutes the present disclosure. Obviously, the storage medium may be any known storage medium or any storage medium developed in the future. It should also be noted that in the apparatus and the method of the present disclosure, it is apparent that the components or the steps may be disassembled and/or reassembled. These disassembling and/or reassembling should be considered as an equivalent solution to the present disclosure. Also, the steps of executing the above-described series of processes may naturally be executed in a time sequence of describing the processes, but need not necessarily be executed in the time order. Some of the steps may be performed in parallel or independently of one another.

The above describes the embodiments of the present disclosure.

## Claims

1. A handover method performed by a terminal, comprising:
obtaining (401) first indication information from a candidate relay;
transmitting (402) the first indication information to a source network device to which a source cell belongs, wherein, the first indication information comprises information about candidate cells and/or candidate relays of the terminal,
wherein
the first indication information is configured to assist the source network device in determining a first target cell and/or a first target relay to which the terminal hands over, the method further comprises:
obtaining a Radio Resource Control, RRC, reconfiguration message;
determining a second target cell and/or a second target relay according to the RRC reconfiguration message, and transmitting an RRC reconfiguration complete message to a network device to which the second target cell belongs, or transmitting, through the second target relay, an RRC reconfiguration complete message to a network device to which the second target cell belongs,
wherein the RRC reconfiguration message comprises at least one of the following:
identification information of the second target relay;
identification information of a second target relay link;
mapping relationship between a sidelink interface Radio Link Control, RLC, channel between the terminal and the second target relay and a second target relay Uu interface RLC channel.

2. The method according to claim 1, wherein the first indication information comprises at least one of following:
Public Land Mobile Network, PLMN, identification information corresponding to a candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of a Uu interface of the candidate relay;
a channel quality measurement result of a sidelink interface between the candidate relay and the terminal;
identification information of the candidate relay;
identification information of the candidate relay link;
moving speed indication information of the candidate relay;
electricity quantity indication information of the candidate relay;
indication information of a service that the candidate relay is capable of serving.

3. The method according to claim 1, wherein obtaining the first indication information from the candidate relay comprises at least one of following:
obtaining the first indication information through a relay discovery related message broadcast by the candidate relay on a sidelink interface;
obtaining the first indication information through a sidelink interface Radio Resource Control, PC5-RRC, message, wherein the terminal establishes a sidelink interface unicast connection with the candidate relay.

4. The method according to claim 1, further comprising:
transmitting second indication information to the source network device to which the source cell belongs, wherein the second indication information comprises at least one of following:
a channel quality measurement result of a sidelink interface between the terminal and a source relay;
moving speed indication information of the source relay;
electricity quantity indication information of the source relay.

5. The method according to claim 1, wherein transmitting the first indication information to the source network device to which the source cell belongs comprises:
transmitting, through a Uu interface, the first indication information to the source network device to which the source cell belongs, or transmitting, through the source relay, the first indication information to the source network device to which the source cell belongs.

6. A handover method performed by a network device, the network device being a source network device to which a source cell belongs, the method comprising:
receiving (701) first indication information transmitted by a terminal, wherein the first indication information comprises information about candidate cells and/or candidate relays of the terminal;
performing (702) a handover decision according to the first indication information, and determining a first target cell and/or a first target relay to which the terminal is to hand over,
wherein
the method further comprises:
transmitting a Radio Resource Control, RRC, reconfiguration message to the terminal through a Uu interface or a source relay, wherein the RRC reconfiguration message is used by the terminal to determine a second target cell and/or a second target relay,
wherein the RRC reconfiguration message comprises at least one of the following:
identification information of the second target relay;
identification information of a second target relay link;
mapping relationship between a sidelink interface Radio Link Control, RLC, channel between the terminal and the second target relay and a second target relay Uu interface RLC channel.

7. The method according to claim 6, further comprising:
transmitting a handover request message to a network device to which the first target cell belongs;
receiving a handover request acknowledge message, wherein the handover request message and/or the handover request acknowledge message comprise at least one of following:
identification information of the terminal;
identification information of the first target relay;
identification information of a first target relay link.

8. The method according to claim 6, wherein the first indication information comprises at least one of following:
Public Land Mobile Network, PLMN, identification information corresponding to a candidate cell to which a candidate relay belongs;
cell identification information corresponding to a candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of a Uu interface of the candidate relay;
a channel quality measurement result of a sidelink interface between the candidate relay and the terminal;
identification information of the candidate relay;
identification information of a candidate relay link;
moving speed indication information of the candidate relay;
electricity quantity indication information of the candidate relay;
indication information of a service that the candidate relay is capable of serving.

9. The method according to claim 6, further comprising:
receiving second indication information transmitted by the terminal, wherein the second indication information comprises at least one of following:
a channel quality measurement result of a sidelink interface between the terminal and a source relay;
moving speed indication information of the source relay;
power quantity indication information of the source relay.

10. A handover method performed by a relay, the relay being a candidate relay for handover of a terminal, the method comprising:
transmitting (801) first indication information to the terminal, wherein the first indication information comprises information about candidate cells and/or candidate relays of the terminal,
wherein
the first indication information is transmitted to a source network device to which a source cell belongs by the terminal, the first indication information is configured to assist the source network device in determining a first target cell and/or a first target relay to which the terminal hands over, and transmitting a Radio Resource Control, RRC, reconfiguration message to the terminal through a Uu interface or a source relay,
wherein the RRC reconfiguration message comprises at least one of the following:
identification information of the second target relay;
identification information of a second target relay link;
mapping relationship between a sidelink interface Radio Link Control, RLC, channel between the terminal and the second target relay and a second target relay Uu interface RLC channel.

11. The method according to claim 10, wherein the first indication information comprises at least one of following:
Public Land Mobile Network, PLMN, identification information corresponding to a candidate cell to which the candidate relay belongs;
cell identification information corresponding to the candidate cell to which the candidate relay belongs;
access mode indication information of accessing the candidate cell by the terminal;
association relation indication information between the candidate relay and the candidate cell;
association relation indication information between a candidate relay link and the candidate cell;
a channel quality measurement result of a Uu interface of the candidate relay;
a channel quality measurement result of a sidelink interface between the candidate relay and the terminal;
identification information of the candidate relay;
identification information of the candidate relay link;
moving speed indication information of the candidate relay;
electricity quantity indication information of the candidate relay;
indication information of a service that the candidate relay is capable of serving.

12. The method according to claim 10, wherein transmitting the first indication information to the terminal comprises at least one of following:
broadcasting a relay discovery related message in a sidelink interface, wherein the relay discovery related message carries the first indication information;
transmitting the first indication information through a sidelink interface Radio Resource Control, PC5-RRC, message, wherein the terminal establishes a sidelink interface unicast connection with the candidate relay;
or,
the method further comprises:
receiving mapping relationship between a sidelink interface Radio Link Control, RLC, channel between the terminal and the first target relay and a first target relay Uu interface RLC channel.

13. A terminal, comprising a transceiver (1204), a memory (1203), a processor (1201) and a computer program stored on the memory (1203) and executable on the processor (1201), wherein when the processor (1201) executes the computer program, the processor (1201) implements steps of the handover method according to any one of claims 1-5.

14. A network device, the network device being a source network device to which a source cell belongs, the network device comprising a transceiver (1304), a memory (1303), a processor (1301)and a computer program stored on the memory (1303) and executable on the processor (1301), wherein when the processor (1301) executes the computer program, the processor (1301) implements steps of the handover method according to any one of claims 6-9.

15. A relay, the relay being a candidate relay for handover of a terminal, the relay comprising a transceiver (1404), a memory (1403), a processor (1401) and a computer program stored on the memory (1403) and executable on the processor (1401), wherein - when the processor (1401) executes the computer program, the processor (1401) implements steps of the handover method according to claim 10 or 11.

## Patentansprüche

1. Übergabeverfahren, das durch ein Endgerät durchgeführt wird, umfassend:
Erhalten (401) erster Angabeinformationen von einem Kandidatenrelais;
Übertragen (402) der ersten Angabeinformationen an eine Quellnetzwerkvorrichtung, zu der eine Quellzelle gehört, wobei die ersten Angabeinformationen Informationen über Kandidatenzellen und/oder Kandidatenrelais des Endgeräts umfassen,
wobei die ersten Angabeinformationen konfiguriert sind, um die Quellnetzwerkvorrichtung bei einem Bestimmen einer ersten Zielzelle und/oder eines ersten Zielrelais zu unterstützen, an die das Endgerät übergibt, wobei das Verfahren ferner umfasst:
Erhalten einer Funkressourcensteuerungsrekonfigurationsnachricht, RRC-Rekonfigurationsnachricht;
Bestimmen einer zweiten Zielzelle und/oder eines zweiten Zielrelais gemäß der RRC-Rekonfigurationsnachricht, und Übertragen einer RRC-Rekonfigurationsabschlussnachricht an eine Netzwerkvorrichtung, zu der die zweite Zielzelle gehört, oder Übertragen, durch das zweite Zielrelais, einer RRC-Rekonfigurationsabschlussnachricht an eine Netzwerkvorrichtung, zu der die zweite Zielzelle gehört,
wobei die RRC-Rekonfigurationsnachricht mindestens eines der Folgenden umfasst:
Identifikationsinformationen des zweiten Zielrelais;
Identifikationsinformationen einer zweiten Zielrelaisverbindung;
Zuordnungsbeziehung zwischen einem Sidelink-Schnittstellenfunkverbindungssteuerungskanal, RLC-Kanal, zwischen dem Endgerät und dem zweiten Zielrelais und einem zweiten Zielrelais-Uu-Schnittstellen-RLC-Kanal.

2. Verfahren nach Anspruch 1, wobei die ersten Angabeinformationen mindestens eines der Folgenden umfassen:
Identifizierungsinformationen eines öffentlichen Mobilkommunikationsnetzes, PLMN, die einer Kandidatenzelle entsprechen, zu der das Kandidatenrelais gehört;
Zellidentifikationsinformationen, die der Kandidatenzelle entsprechen, zu der das Kandidatenrelais gehört;
Zugriffsmodusangabeinformationen eines Zugreifens auf die Kandidatenzelle durch das Endgerät;
Zuordnungsbeziehungsangabeinformationen zwischen dem Kandidatenrelais und der Kandidatenzelle;
Zuordnungsbeziehungsangabeinformationen zwischen einer Kandidatenrelaisverbindung und der Kandidatenzelle;
ein Kanalqualitätsmessergebnis einer Uu-Schnittstelle des Kandidatenrelais;
ein Kanalqualitätsmessergebnis einer Sidelink-Schnittstelle zwischen dem Kandidatenrelais und dem Endgerät;
Identifikationsinformationen des Kandidatenrelais;
Identifizierungsinformationen der Kandidatenrelaisverbindung;
Bewegungsgeschwindigkeitsangabeinformationen des Kandidatenrelais;
Elektrizitätsmengenangabeinformationen des Kandidatenrelais;
Angabeinformationen eines Dienstes, den das Kandidatenrelais bedienen kann.

3. Verfahren nach Anspruch 1, wobei das Erhalten der ersten Angabeinformationen von dem Kandidatenrelais mindestens eines der Folgenden umfasst:
Erhalten der ersten Angabeinformationen durch eine auf eine Relaisentdeckung bezogene Nachricht, die durch das Kandidatenrelais auf einer Sidelink-Schnittstelle rundgesendet wird;
Erhalten der ersten Angabeinformationen durch eine Sidelink-Schnittstellenfunkressourcensteuerungsnachricht, PC5-RRC-Nachricht, wobei das Endgerät eine Sidelink-Schnittstellen-Unicast-Verknüpfung mit dem Kandidatenrelais herstellt.

4. Verfahren nach Anspruch 1, ferner umfassend:
Übertragen zweiter Angabeinformationen an die Quellnetzwerkvorrichtung, zu der die Quellzelle gehört, wobei die zweiten Angabeinformationen mindestens eines der Folgenden umfassen:
ein Kanalqualitätsmessergebnis einer Sidelink-Schnittstelle zwischen dem Endgerät und einem Quellrelais;
Bewegungsgeschwindigkeitsangabeinformationen des Quellrelais;
Elektrizitätsmengenangabeinformationen des Quellrelais.

5. Verfahren nach Anspruch 1, wobei das Übertragen der ersten Angabeinformationen an die Quellnetzwerkvorrichtung, zu der die Quellzelle gehört, umfasst:
Übertragen, durch eine Uu-Schnittstelle, der ersten Angabeinformationen an die Quellnetzwerkvorrichtung, zu der die Quellzelle gehört, oder Übertragen, durch das Quellrelais, der ersten Angabeinformationen an die Quellnetzwerkvorrichtung, zu der die Quellzelle gehört.

6. Übergabeverfahren, das durch eine Netzwerkvorrichtung durchgeführt wird, wobei die Netzwerkvorrichtung eine Quellnetzwerkvorrichtung ist, zu der eine Quellzelle gehört, das Verfahren umfassend:
Empfangen (701) erster Angabeinformationen, die durch ein Endgerät übertragen werden, wobei die ersten Angabeinformationen Informationen über Kandidatenzellen und/oder Kandidatenrelais des Endgeräts umfassen;
Durchführen (702) einer Übergabeentscheidung gemäß den ersten Angabeinformationen und Bestimmen einer ersten Zielzelle und/oder eines ersten Zielrelais, an die das Endgerät übergeben soll, wobei
das Verfahren ferner umfasst:
Übertragen einer Funkressourcensteuerungsrekonfigurationsnachricht, RRC-Rekonfigurationsnachricht, an das Endgerät über eine Uu-Schnittstelle oder ein Quellrelais, wobei die RRC-Rekonfigurationsnachricht durch das Endgerät verwendet wird, um eine zweite Zielzelle und/oder ein zweites Zielrelais zu bestimmen,
wobei die RRC-Rekonfigurationsnachricht mindestens eines der Folgenden umfasst:
Identifikationsinformationen des zweiten Zielrelais;
Identifikationsinformationen einer zweiten Zielrelaisverbindung;
Zuordnungsbeziehung zwischen einem Sidelink-Schnittstellenfunkverbindungssteuerungskanal, RLC-Kanal, zwischen dem Endgerät und dem zweiten Zielrelais und einem zweiten Zielrelais-Uu-Schnittstellen-RLC-Kanal.

7. Verfahren nach Anspruch 6, ferner umfassend:
Übertragen einer Übergabeanforderungsnachricht an eine Netzwerkvorrichtung, zu der die erste Zielzelle gehört;
Empfangen einer Übergabeanforderungsbestätigungsnachricht, wobei die Übergabeanforderungsnachricht und/oder die Übergabeanforderungsbestätigungsnachricht mindestens eines der Folgenden umfassen:
Identifikationsinformationen des Endgeräts;
Identifikationsinformationen des ersten Zielrelais;
Identifikationsinformationen einer ersten Zielrelaisverbindung.

8. Verfahren nach Anspruch 6, wobei die ersten Angabeinformationen mindestens eines der Folgenden umfassen:
Identifizierungsinformationen des öffentlichen Mobilkommunikationsnetzes, PLMN, die einer Kandidatenzelle entsprechen, zu der ein Kandidatenrelais gehört;
Zellidentifikationsinformationen, die einer Kandidatenzelle entsprechen, zu der das Kandidatenrelais gehört;
Zugriffsmodusangabeinformationen des Zugreifens auf die Kandidatenzelle durch das Endgerät;
Zuordnungsbeziehungsangabeinformationen zwischen dem Kandidatenrelais und der Kandidatenzelle;
Zuordnungsbeziehungsangabeinformationen zwischen einer Kandidatenrelaisverbindung und der Kandidatenzelle;
ein Kanalqualitätsmessergebnis einer Uu-Schnittstelle des Kandidatenrelais;
ein Kanalqualitätsmessergebnis einer Sidelink-Schnittstelle zwischen dem Kandidatenrelais und dem Endgerät;
Identifikationsinformationen des Kandidatenrelais;
Identifizierungsinformationen einer Kandidatenrelaisverbindung;
Bewegungsgeschwindigkeitsangabeinformationen des Kandidatenrelais;
Elektrizitätsmengenangabeinformationen des Kandidatenrelais;
Angabeinformationen eines Dienstes, den das Kandidatenrelais bedienen kann.

9. Verfahren nach Anspruch 6, ferner umfassend:
Empfangen zweiter Angabeinformationen, die durch das Endgerät übertragen werden, wobei die zweiten Angabeinformationen mindestens eines der Folgenden umfassen:
ein Kanalqualitätsmessergebnis einer Sidelink-Schnittstelle zwischen dem Endgerät und einem Quellrelais;
Bewegungsgeschwindigkeitsangabeinformationen des Quellrelais;
Leistungsmengenangabeinformationen des Quellrelais.

10. Übergabeverfahren, das durch ein Relais durchgeführt wird, wobei das Relais ein Kandidatenrelais für die Übergabe eines Endgeräts ist, das Verfahren umfassend:
Übertragen (801) erster Angabeinformationen an das Endgerät, wobei die ersten Angabeinformationen Informationen über Kandidatenzellen und/oder Kandidatenrelais des Endgeräts umfassen, wobei
die ersten Angabeinformationen durch das Endgerät an eine Quellnetzwerkvorrichtung übertragen werden, zu der eine Quellzelle gehört, die ersten Angabeinformationen konfiguriert sind, um die Quellnetzwerkvorrichtung bei dem Bestimmen einer ersten Zielzelle und/oder eines ersten Zielrelais, an die das Endgerät übergibt, und bei dem Übertragen einer Funkressourcensteuerungsrekonfigurationsnachricht, RRC-Rekonfigurationsnachricht, an das Endgerät über eine Uu-Schnittstelle oder ein Quellrelais zu unterstützen,
wobei die RRC-Rekonfigurationsnachricht mindestens eines der Folgenden umfasst:
Identifikationsinformationen des zweiten Zielrelais;
Identifikationsinformationen einer zweiten Zielrelaisverbindung;
Zuordnungsbeziehung zwischen einem Sidelink-Schnittstellenfunkverbindungssteuerungskanal, RLC-Kanal, zwischen dem Endgerät und dem zweiten Zielrelais und einem zweiten Zielrelais-Uu-Schnittstellen-RLC-Kanal.

11. Verfahren nach Anspruch 10, wobei die ersten Angabeinformationen mindestens eines der Folgenden umfassen:
Identifizierungsinformationen des öffentlichen Mobilkommunikationsnetzes, PLMN, die einer Kandidatenzelle entsprechen, zu der das Kandidatenrelais gehört;
Zellidentifikationsinformationen, die der Kandidatenzelle entsprechen, zu der das Kandidatenrelais gehört;
Zugriffsmodusangabeinformationen des Zugreifens auf die Kandidatenzelle durch das Endgerät;
Zuordnungsbeziehungsangabeinformationen zwischen dem Kandidatenrelais und der Kandidatenzelle;
Zuordnungsbeziehungsangabeinformationen zwischen einer Kandidatenrelaisverbindung und der Kandidatenzelle;
ein Kanalqualitätsmessergebnis einer Uu-Schnittstelle des Kandidatenrelais;
ein Kanalqualitätsmessergebnis einer Sidelink-Schnittstelle zwischen dem Kandidatenrelais und dem Endgerät;
Identifikationsinformationen des Kandidatenrelais;
Identifizierungsinformationen der Kandidatenrelaisverbindung;
Bewegungsgeschwindigkeitsangabeinformationen des Kandidatenrelais;
Elektrizitätsmengenangabeinformationen des Kandidatenrelais;
Angabeinformationen eines Dienstes, den das Kandidatenrelais bedienen kann.

12. Verfahren nach Anspruch 10, wobei das Übertragen der ersten Angabeinformationen an das Endgerät mindestens eines der Folgenden umfasst:
Rundsenden einer auf die Relaisentdeckung bezogenen Nachricht in einer Sidelink-Schnittstelle, wobei die auf die Relaisentdeckung bezogene Nachricht die ersten Angabeinformationen trägt;
Übertragen der ersten Angabeinformationen durch eine Sidelink-Schnittstellenfunkressourcensteuerungsnachricht, PC5-RRC-Nachricht, wobei das Endgerät eine Sidelink-Schnittstellen-Unicast-Verknüpfung mit dem Kandidatenrelais herstellt;
oder
das Verfahren ferner umfasst:
Empfangen der Zuordnungsbeziehung zwischen einem Sidelink-Schnittstellen-Funkverbindungssteuerungskanal, RLC-Kanal, zwischen dem Endgerät und dem ersten Zielrelais und einem ersten Zielrelais-Uu-Schnittstellen-RLC-Kanal.

13. Endgerät, umfassend einen Transceiver (1204), einen Speicher (1203), einen Prozessor (1201) und ein Computerprogramm, das auf dem Speicher (1203) gespeichert ist und auf dem Prozessor (1201) ausführbar ist, wobei, wenn der Prozessor (1201) das Computerprogramm ausführt, der Prozessor (1201) die Schritte des Übergabeverfahrens nach einem der Ansprüche 1 bis 5 implementiert.

14. Netzwerkvorrichtung, wobei die Netzwerkvorrichtung eine Quellnetzwerkvorrichtung ist, zu der eine Quellzelle gehört, die Netzwerkvorrichtung umfassend einen Transceiver (1304), einen Speicher (1303), einen Prozessor (1301) und ein Computerprogramm, das auf dem Speicher (1303) gespeichert ist und auf dem Prozessor (1301) ausführbar ist, wobei, wenn der Prozessor (1301) das Computerprogramm ausführt, der Prozessor (1301) Schritte des Übergabeverfahrens nach einem der Ansprüche 6 bis 9 implementiert.

15. Relais, wobei das Relais ein Kandidatenrelais für die Übergabe eines Endgeräts ist, das Relais umfassend einen Transceiver (1404), einen Speicher (1403), einen Prozessor (1401) und ein Computerprogramm, das auf dem Speicher (1403) gespeichert ist und auf dem Prozessor (1401) ausführbar ist, wobei, wenn der Prozessor (1401) das Computerprogramm ausführt, der Prozessor (1401) Schritte des Übergabeverfahrens nach Anspruch 10 oder 11 implementiert.

## Revendications

1. Procédé de transfert réalisé par un terminal, comprenant :
l'obtention (401) de premières informations d'indication en provenance d'un relais candidat ;
l'émission (402) des premières informations d'indication vers un dispositif de réseau source auquel appartient une cellule source, dans lequel, les premières informations d'indication comprennent des informations concernant des cellules candidates et/ou des relais candidats du terminal,
dans lequel les premières informations d'indication sont configurées pour aider le dispositif de réseau source à déterminer une première cellule cible et/ou un premier relais cible vers lequel le terminal effectue un transfert, le procédé comprend en outre :
l'obtention d'un message de reconfiguration de contrôle des ressources radio, RRC ;
la détermination d'une seconde cellule cible et/ou d'un second relais cible selon le message de reconfiguration RRC, et l'émission d'un message d'achèvement de reconfiguration RRC vers un dispositif de réseau auquel appartient la seconde cellule cible, ou l'émission, par l'intermédiaire du second relais cible, d'un message d'achèvement de reconfiguration RRC vers un dispositif de réseau auquel appartient la seconde cellule cible,
dans lequel le message de reconfiguration RRC comprend au moins l'un parmi ce qui suit :
des informations d'identification du second relais cible ;
des informations d'identification d'une seconde liaison de relais cible ;
une relation de mise en correspondance entre un canal de contrôle de liaison radio, RLC, d'interface de liaison latérale entre le terminal et le second relais cible et un canal RLC d'interface Uu de second relais cible.

2. Procédé selon la revendication 1, dans lequel les premières informations d'indication comprennent au moins l'un parmi ce qui suit :
des informations d'identification de réseau mobile terrestre public, PLMN, correspondant à une cellule candidate à laquelle appartient le relais candidat ;
des informations d'identification de cellule correspondant à la cellule candidate à laquelle appartient le relais candidat ;
des informations d'indication de mode d'accès pour que le terminal accède à la cellule candidate ;
des informations d'indication de relation d'association entre le relais candidat et la cellule candidate ;
des informations d'indication de relation d'association entre une liaison de relais candidat et la cellule candidate ;
un résultat de mesure de qualité de canal d'une interface Uu du relais candidat ;
un résultat de mesure de qualité de canal d'une interface de liaison latérale entre le relais candidat et le terminal ;
des informations d'identification du relais candidat ;
des informations d'identification de la liaison de relais candidat ;
des informations d'indication de vitesse de déplacement du relais candidat ;
des informations d'indication de quantité d'électricité du relais candidat ;
des informations d'indication d'un service que le relais candidat est capable d'assurer.

3. Procédé selon la revendication 1, dans lequel l'obtention des premières informations d'indication en provenance du relais candidat comprend au moins l'un parmi ce qui suit :
l'obtention des premières informations d'indication par l'intermédiaire d'un message apparenté à une découverte de relais diffusé par le relais candidat sur une interface de liaison latérale ;
l'obtention des premières informations d'indication au moyen d'un message de contrôle de ressources radio d'interface de liaison latérale, PC5-RRC, dans lequel le terminal établit une connexion de monodiffusion d'interface de liaison latérale avec le relais candidat.

4. Procédé selon la revendication 1, comprenant en outre :
l'émission de secondes informations d'indication vers le dispositif de réseau source auquel appartient la cellule source, dans lequel les secondes informations d'indication comprennent au moins l'un parmi ce qui suit :
un résultat de mesure de qualité de canal d'une interface de liaison latérale entre le terminal et un relais source ;
des informations d'indication de vitesse de déplacement du relais source ;
des informations d'indication de quantité d'électricité du relais source.

5. Procédé selon la revendication 1, dans lequel l'émission des premières informations d'indication vers le dispositif de réseau source auquel appartient la cellule source comprend :
l'émission, par l'intermédiaire d'une interface Uu, des premières informations d'indication vers le dispositif de réseau source auquel appartient la cellule source, ou l'émission, par l'intermédiaire du relais source, des premières informations d'indication vers le dispositif de réseau source auquel appartient la cellule source.

6. Procédé de transfert intercellulaire réalisé par un dispositif de réseau, le dispositif de réseau étant un dispositif de réseau source auquel appartient une cellule source, le procédé comprenant :
l'émission (701) de premières informations d'indication émises par un terminal, dans lequel les premières informations d'indication comprennent des informations concernant des cellules candidates et/ou des relais candidats du terminal ;
la réalisation (702) d'une décision de transfert selon les premières informations d'indication, et la détermination d'une première cellule cible et/ou d'un premier relais cible vers lequel le terminal doit effectuer le transfert, dans lequel
le procédé comprend en outre :
l'émission d'un message de reconfiguration de contrôle de ressources radio, RRC, vers le terminal par l'intermédiaire d'une interface Uu ou d'un relais source, dans lequel le message de reconfiguration RRC est utilisé par le terminal pour déterminer une seconde cellule cible et/ou un second relais cible,
dans lequel le message de reconfiguration RRC comprend au moins l'un parmi ce qui suit :
des informations d'identification du second relais cible ;
des informations d'identification d'une seconde liaison de relais cible ;
une relation de mise en correspondance entre un canal de contrôle de liaison radio, RLC, d'interface de liaison latérale entre le terminal et le second relais cible et un canal RLC d'interface Uu de second relais cible.

7. Procédé selon la revendication 6, comprenant en outre :
l'émission d'un message de demande de transfert vers un dispositif de réseau auquel appartient la première cellule cible ;
la réception d'un message d'accusé de réception de demande de transfert, dans lequel le message de demande de transfert et/ou le message d'accusé de réception de demande de transfert comprennent au moins l'un parmi ce qui suit :
des informations d'identification du terminal ;
des informations d'identification du premier relais cible ;
des informations d'identification d'une première liaison de relais cible.

8. Procédé selon la revendication 6, dans lequel les premières informations d'indication comprennent au moins l'un parmi ce qui suit :
des informations d'identification de réseau mobile terrestre public, PLMN, correspondant à une cellule candidate à laquelle appartient un relais candidat ;
des informations d'identification de cellule correspondant à une cellule candidate à laquelle appartient le relais candidat ;
des informations d'indication de mode d'accès pour que le terminal accède à la cellule candidate ;
des informations d'indication de relation d'association entre le relais candidat et la cellule candidate ;
des informations d'indication de relation d'association entre une liaison de relais candidat et la cellule candidate ;
un résultat de mesure de qualité de canal d'une interface Uu du relais candidat ;
un résultat de mesure de qualité de canal d'une interface de liaison latérale entre le relais candidat et le terminal ;
des informations d'identification du relais candidat ;
des informations d'identification d'une liaison de relais candidat ;
des informations d'indication de vitesse de déplacement du relais candidat ;
des informations d'indication de quantité d'électricité du relais candidat ;
des informations d'indication d'un service que le relais candidat est capable d'assurer.

9. Procédé selon la revendication 6, comprenant en outre :
la réception de secondes informations d'indication émises par le terminal, dans lequel les secondes informations d'indication comprennent au moins l'un parmi ce qui suit :
un résultat de mesure de qualité de canal d'une interface de liaison latérale entre le terminal et un relais source ;
des informations d'indication de vitesse de déplacement du relais source ;
des informations d'indication de quantité d'énergie du relais source.

10. Procédé de transfert réalisé par un relais, le relais étant un relais candidat pour le transfert d'un terminal, le procédé comprenant :
l'émission (801) de premières informations d'indication vers le terminal, dans lequel les premières informations d'indication comprennent des informations concernant des cellules candidates et/ou des relais candidats du terminal, dans lequel
les premières informations d'indication sont émises vers un dispositif de réseau source auquel appartient une cellule source par le terminal, les premières informations d'indication sont configurées pour aider le dispositif de réseau source à déterminer une première cellule cible et/ou un premier relais cible vers lequel le terminal effectue un transfert, et à émettre un message de reconfiguration de contrôle de ressources radio, RRC, vers le terminal par l'intermédiaire d'une interface Uu ou d'un relais source,
dans lequel le message de reconfiguration RRC comprend au moins l'un parmi ce qui suit :
des informations d'identification du second relais cible ;
des informations d'identification d'une seconde liaison de relais cible ;
une relation de mise en correspondance entre un canal de contrôle de liaison radio, RLC, d'interface de liaison latérale entre le terminal et le second relais cible et un canal RLC d'interface Uu de second relais cible.

11. Procédé selon la revendication 10, dans lequel les premières informations d'indication comprennent au moins l'un parmi ce qui suit :
des informations d'identification de réseau mobile terrestre public, PLMN, correspondant à une cellule candidate à laquelle appartient le relais candidat ;
des informations d'identification de cellule correspondant à la cellule candidate à laquelle appartient le relais candidat ;
des informations d'indication de mode d'accès pour que le terminal accède à la cellule candidate ;
des informations d'indication de relation d'association entre le relais candidat et la cellule candidate ;
des informations d'indication de relation d'association entre une liaison de relais candidat et la cellule candidate ;
un résultat de mesure de qualité de canal d'une interface Uu du relais candidat ;
un résultat de mesure de qualité de canal d'une interface de liaison latérale entre le relais candidat et le terminal ;
des informations d'identification du relais candidat ;
des informations d'identification de la liaison de relais candidat ;
des informations d'indication de vitesse de déplacement du relais candidat ;
des informations d'indication de quantité d'électricité du relais candidat ;
des informations d'indication d'un service que le relais candidat est capable d'assurer.

12. Procédé selon la revendication 10, dans lequel l'émission des premières informations d'indication vers le terminal comprend au moins l'un parmi ce qui suit :
la diffusion d'un message apparenté à une découverte de relais dans une interface de liaison latérale, dans lequel le message apparenté à une découverte de relais transporte les premières informations d'indication ;
l'émission des premières informations d'indication au moyen d'un message de contrôle de ressources radio d'interface de liaison latérale, PC5-RRC, dans lequel le terminal établit une connexion de monodiffusion d'interface de liaison latérale avec le relais candidat ;
ou,
le procédé comprend en outre :
la réception d'une relation de mise en correspondance entre un canal de contrôle de liaison radio, RLC, d'interface de liaison latérale entre le terminal et le second relais cible et un canal RLC d'interface Uu de premier relais cible.

13. Terminal, comprenant un émetteur-récepteur (1204), une mémoire (1203), un processeur (1201) et un programme informatique stocké dans la mémoire (1203) et pouvant être exécuté sur le processeur (1201), dans lequel lorsque le processeur (1201) exécute le programme informatique, le processeur (1201) met en œuvre des étapes du procédé de transfert selon l'une quelconque des revendications 1 à 5.

14. Dispositif de réseau, le dispositif de réseau étant un dispositif de réseau source auquel appartient une cellule source, le dispositif de réseau comprenant un émetteur-récepteur (1304), une mémoire (1303), un processeur (1301) et un programme informatique stocké sur la mémoire (1303) et pouvant être exécuté sur le processeur (1301), dans lequel lorsque le processeur (1301) exécute le programme informatique, le processeur (1301) met en œuvre des étapes du procédé de transfert selon l'une quelconque des revendications 6 à 9.

15. Relais, le relais étant un relais candidat pour le transfert d'un terminal, le relais comprenant un émetteur-récepteur (1404), une mémoire (1403), un processeur (1401) et un programme informatique stocké sur la mémoire (1403) et pouvant être exécuté sur le processeur (1401), dans lequel lorsque le processeur (1401) exécute le programme informatique, le processeur (1401) met en œuvre des étapes du procédé de transfert selon la revendication 10 ou 11.
